# EUROPÄISCHE PATENTSCHRIFT

(11) **EP 1 787 967 B1**
(45) Veröffentlichungstag und Bekanntmachung des Hinweises auf die Patenterteilung: **26.05.2010**
(21) Anmeldenummer: 05025360.8
(22) Anmeldetag: 21.11.2005
(51) Int. Cl.: C04B 35/565, C04B 35/185, C04B 35/63, C04B 35/66

(54) **Verfahren zum Herstellen eines gebrannten Formteils einer feuerfesten Auskleidung**
Process for the manufacture of a burnt shaped body for a refractory lining
Procedé pour la production d' une matière moulable pour une revêtement refractaire

(43) Veröffentlichungstag der Anmeldung: 23.05.2007
(73) Patentinhaber: SIEMENS AKTIENGESELLSCHAFT, 80333 München (DE)
(72) Erfinder: Grote, Holger, 53121 Bonn (DE); Herz, Margarete, 45144 Essen (DE); Kollenberg, Wolfgang, Dr., 50321 Brühl (DE); Rasch, Christine, 65550 Limburg (DE); Tertilt, Marc, 45529 Hattingen (DE)

(56) Entgegenhaltungen:
- WO-A-94/03410
- DE-A1- 4 242 610
- US-A- 4 800 181
- GERALD ROUTSCHKA: "POCKET MANUAL REFRACTORY MATERIALS" 1997, VULKAN-VERLAG ESSEN , XP002379190 * Seite 74 - Seite 80 *
- PATENT ABSTRACTS OF JAPAN Bd. 1999, Nr. 01, 29. Januar 1999 (1999-01-29) & JP 10 279357 A (TOKYO YOGYO CO LTD), 20. Oktober 1998 (1998-10-20)
- DATABASE WPI Section Ch, Week 197330 Derwent Publications Ltd., London, GB; Class L02, AN 1973-42263U XP002398872 & SU 361 159 A (MATERIALS SCIENCE INST AC) 7. Dezember 1972 (1972-12-07)
- PATENT ABSTRACTS OF JAPAN Bd. 1999, Nr. 01, 29. Januar 1999 (1999-01-29) & JP 10 281653 A (TOKYO YOGYO CO LTD), 23. Oktober 1998 (1998-10-23)

## Beschreibung

Die Erfindung betrifft ein Verfahren zum Herstellen eines gebrannten Formteils einer feuerfesten Auskleidung.

Im Bereich der Brennkammertechnik müssen, wie beispielsweise bei Gasturbinen-Brennkammern, die Wände von Hochtemperaturreaktoren mit geeigneten Auskleidungen bzw. Abschirmungen geschützt werden, damit insbesondere sich dahinter befindende tragende Strukturen gegen Heißgasangriff geschützt sind. Als Abschirmung sind keramische Materialien in der Regel besser geeignet als metallische Werkstoffe, weil sie temperaturbeständiger sowie korrosionsbeständiger sind und eine niedrigere Wärmeleitfähigkeit aufweisen.

Die keramischen Auskleidungen, welche oftmals auch als keramische Hitzeschilde bezeichnet werden, sind in der Regel durch einen Sinterungsprozess hergestellt worden, bei dem dann auch die schützenden Eigenschaften der Keramiken festgelegt wurden.

An die keramischen Hitzeschilde werden ferner hohe Anforderungen hinsichtlich ihrer mechanischen Belastbarkeit gestellt und es wird verstärkt versucht hier Verbesserungen durch Herstellen von Composite-Bauteilen, wie beispielsweise mit faserverstärkten Bauteilen auf Basis CMC (ceramic matrix composites), oder mit Strukturkeramik-Bauteilen oder gradierten Bauteilen besonders gute mechanische Eigenschaften zu erzielen.

Aus dem Stand der Technik, beispielsweise aus der der DE 42 42 610 A1, der WO 94/03410 und "Pocket Manual Refractory Materials" von G. Routschka, 1997, Vulkan-Verlag Essen, sowie die US-A-800 181 ist der Einsatz von feuerfesten Formmassen auf Basis von Siliziumcarbid und Aluminiumsilikat bekannt.

Die JP 10 279 357 A sowie die JP 10 281 653 geben eine feuerfeste Masse für die Auskleidung eines Induktionsofens an.

Die Veröffentlichung "Materials Science Inst. AC, 7. Dezember 1972, gibt ein Feuerfestmaterial an, welches eine verbesserte Kerbschlagzähigkeit und Hitzebeständigkeit durch die Verwendung von 85-90 wt.% Karbid und 85-90 wt.% fadenähnlichen Mullit Einkristall aufweist.

Eine Aufgabe der Erfindung ist es, ein Verfahren zum Herstellen einer feuerfesten Auskleidung anzugeben.

Die Formmasse muss die Anforderungen an keramische Bauteile für den Einsatz in stationären Gasturbinen im Heißgaspfad oder in der Brennkammer erfüllen.

Die Aufgabe ist erfindungsgemäß durch die Angabe eines Verfahrens zum Herstellen eines gebrannten Formteils einer feuerfesten Auskleidung gelöst, welches die folgenden Schritte umfasst: Herstellen einer Formmasse mit mindestens den Anteilen Siliziumcarbid, Aluminiumoxid und Aluminiumsilikat unter Zugabe kolloidaler Kieselsäurelösung, Vergießen der Formmasse unter Vibration, sprunghaftes Absenken der Temperatur der Formmasse, sowie Trocknen und Brennen der vergossenen Formmasse.

Die aus den genannten bestimmten Gewichtsanteilen von Siliziumcarbid und Aluminiumoxid bzw. Aluminiumsilikat zusammengesetzte Formmasse bildet ein Grundmaterial, welches durch Zugabe von kolloidaler Kieselsäurelösung in einem so genannten Sol-Gel-Prozess verfestigt und ferner mittels Gießen unter Vibration verarbeitet werden kann. Die dabei zunächst als Sol bzw. kolloidale Lösung vorliegende Kieselsäure wird durch das genannte sprunghafte Absenken der Temperatur in ein Gel überführt und damit die Formmasse, welche auch als Gießmasse oder Vibrationsmasse bezeichnet werden kann, verfestigt. Der eigentliche Trocknungs- und Sinterprozess kann nachfolgend bei vergleichsweise geringen Brenntemperaturen erfolgen, wie unten noch genauer erläutert werden wird.

In einer vorteilhaften Ausgestaltung wird bei der erfindungsgemäßen Formmasse Siliziumcarbid, mit der chemischen Formel SiC, in einem Gewichtsanteil zwischen zirka 70% und zirka 90% verwendet.

Besonders vorteilhaft wird bei der Formmasse als Aluminiumoxid Korund, d.h. Aluminiumoxid in trigonaler Struktur mit der chemischen Formel Al₂O₃, insbesondere bei einem Gewichtsanteil zwischen zirka 5% und zirka 20% verwendet.

Der Gewichtsanteil des verwendeten Aluminiumsilikats beträgt besonders vorteilhaft zwischen zirka 5% und 30%, am Bevorzugtesten weniger als zirka 25%. Das Aluminiumsilikat ist dabei vorteilhaft Mullit mit der chemischen Formel 3Al₂O₃-2SiO₂ oder 2Al₂O₃-1SiO₂.

Ein Formteil kann beispielsweise hergestellt werden, wenn die zu Grunde liegende Formmasse Microsilica (SiO₂) mit einem Gewichtsanteil zwischen 5% und 30% aufweist.

Ferner sollte das Formteil frei von ungebundenem Siliziumoxid, SiO₂ sein oder der Gewichtsanteil von derartigem Siliziumoxid zumindest weniger als zirka 10% sein. Schließlich ist es auch von Vorteil, wenn die Formmasse frei von Calcium-Aluminaten ist.

Der Gewichtsanteil der zugefügten kolloidalen Kieselsäurelösung kann weniger als zirka 10% betragen. Ferner sollte die kolloidale Kieselsäurelösung einen Feststoffgehalt von mindestens zirka 30 Gewichtsprozent aufweisen.

Um eine gute Verarbeitbarkeit zu erzielen sollte der Formmasse bevorzugt eine Flüssigkeit, insbesondere Wasser, mit einem Gewichtsanteil von mehr als zirka 1% und weniger als zirka 10% zugegeben sein.

Die maximale Korngröße sollte typischerweise zwischen zirka 2 mm und zirka 5 mm liegen. Der Gewichtsanteil dieser Kornfraktion sollte weniger als zirka 25% sein. Außerdem sollte der Gewichtsanteil an Siliziumcarbid in der Formmasse, dessen Korngröße kleiner als 0,5 mm ist, nicht mehr als 40% und vorzugsweise mindestens 15% betragen.

Alternativ oder zusätzlich sollte die erfindungsgemäße Formmasse mit einem Gewichtsanteil von weniger als zirka 20%, insbesondere von weniger als zirka 15% reaktiver Tonerde ergänzt sein.

Das gebrannte Formteil sollte in seiner Zusammensetzung Gewichtsanteile aufweisen, welche im Wesentlichen denen der oben genannten Formmassen entsprechen. Die offene Porosität des gebrannten Formteils sollte mehr als zirka 10%, insbesondere mehr als zirka 13% und weniger als zirka 35% betragen. Die erfindungsgemäß vorteilhaft angestrebte Rohdichte des gebrannten Formteils beträgt weniger als zirka 3,5 g/cm³, insbesondere weniger als zirka 3,0 g/cm³.

Hinsichtlich der gewünschten mechanischen Eigenschaften sollte das gebrannte Formteil auf eine mittlere Biegefestigkeit bei Normalbedingungen von mehr als zirka 15,0 MPa eingestellt sein. Die angegebene mittlere Biegefestigkeit wird dabei mit einem 3-Punkt-Biegeversuch gemessen.

Das derart aus einer Formmasse hergestellte Formteil kann vorteilhaft als feuerfeste Auskleidung bei Brennkammern von stationären Gasturbinen verwendet werden, insbesondere wenn die dem Heißgas zugewandte Seite eine so genannte EBC (Environmental Barrier Coating) Schutzschicht mit einer der Heißgastemperatur angepassten Schichtdicke in einer Größenordnung von 5 mm oder von vorzugsweise mindestens 10 mm aufweist. Um das Formteil herzustellen, wird, wie oben bereits erwähnt, die Formmasse unter Vibration durch Verfestigung auf der Basis von kolloidaler Kieselsäurelösung hergestellt. Um diese Verfestigung zu erreichen wird erfindungsgemäß bevorzugt die Umgebungstemperatur der Formmasse sprunghaft auf eine Temperatur von weniger als zirka 0°C abgesenkt und dort insbesondere über einen Zeitraum von mehr als zirka 15 min und weniger als zirka 2,5 h gehalten. Besonders bevorzugt wird eine Abkühltemperatur der Umgebung von zirka -20°C bis zirka -40°C.

Die fertig vergossene Formmasse wird erfindungsgemäß bevorzugt bei einer Temperatur von zwischen zirka 1300°C und zirka 1650°C gebrannt. Für das Brennen einer Keramik wird innerhalb dieses Temperaturbereichs eine Temperatur von zwischen zirka 1350°C und zirka 1650°C bevorzugt. Eine faserverstärkte Keramik wird bevorzugt bei einer Temperatur zwischen zirka 1300°C und zirka 1400°C gebrannt. Für Strukturkeramik wird erfindungsgemäß eine Brenntemperatur von zwischen zirka 1300°C und zirka 1600°C bevorzugt.

Nachfolgend wird ein Ausführungsbeispiel einer erfindungsgemäßen Formmasse, eines daraus hergestellten gebrannten Formteils, einer damit gebildeten feuerfesten Auskleidung sowie ein zugehöriges Verfahren zum Herstellen der Auskleidung anhand der beigefügten schematischen Zeichnungen näher erläutert.

Die Fig. zeigt ein schematisches Ablaufdiagramm eines Herstellungsverfahrens einer feuerfesten Auskleidung inklusive der Vorbereitung der verwendeten Formmasse.

Ein als feuerfeste Auskleidung einer Brennkammer einer stationären Gasturbine vorgesehenes Formteil wird gemäß der Fig. aus einer Formmasse hergestellt, welche in einem ersten Arbeitsschritt aus im Wesentlichen sieben Bestandteilen zusammengemischt wird.

Diese sieben Bestandteile sind in der Fig. mit den Bezugszeichen 6, 8, 10, 12, 14, 16 und 18 bezeichnet und beinhalten in dieser Reihenfolge Microsilica (SiO₂), Siliziumcarbid (SiC), Korund (Al₂O₃) , Mullit (2Al₂O₃-1SiO₂ oder 3Al₂O₃-2SiO₂), Kieselsäure (Si(OH)₄), Wasser (H₂O) sowie reaktive Tonerde. Die Gewichtsanteile dieser Materialien betragen beim Siliziumcarbid (SiC) vorzugsweise zwischen 70% und 90%, beim Korund als Aluminiumoxid zwischen zirka 5% und 20%, beim Mullit als Aluminiumsilikat zwischen zirka 5% und 30% und beim Wasser zwischen zirka 3% und 7%. Die Kieselsäure ist mit einem Gewichtanteil von zwischen zirka 3% und 10% und das Microsilica (SiO₂) mit einem Gewichtsanteil von zwischen 5% und 30% zugegeben. Der Anteil an reaktiver Tonerde beträgt zwischen zirka 5% und 20%.

Die genannten Bestandteile werden in einem in der Fig. mit Bezugszeichen 20 beschrifteten Mischvorgang zu einer Formmasse zusammengefügt, welche nachfolgend in einem mit Bezugszeichen 22 bezeichneten Vergießvorgang unter Vibration in einer Gießform vergossen wird.

Die derart vorbereitete Gießform wird ausgehend von Raumtemperatur sprunghaft abgekühlt, indem sie einer Atmosphäre mit einer Temperatur von zirka -25°C ausgesetzt wird. Durch diese sprunghafte Abkühlung der sich in der Gießform befindenden Formmasse verfestigt sich die darin als Sol vorliegende Kieselsäure zu einem Gel. Dabei wird auch die Formmasse insgesamt verfestigt und in besonders vorteilhafter Weise für einen mit Bezugszeichen 26 bezeichneten letzten Arbeitsschritt des Trocknens und Brennens vorbereitet.

Bei diesem Arbeitsschritt 26 wird die Formmasse bei einer Sintertemperatur von zwischen zirka 1300°C und zirka 1600°C gebrannt. Aufgrund dieser vergleichsweise niedrigen Brenntemperatur können sich in der Formmasse eingesetzte Faserverstärkungen befinden, so dass insgesamt eine faserverstärkte Keramik hergestellt werden kann.

Die als Formteil hergestellte Keramik - das Endprodukt - weist besonders vorteilhafte mechanische Eigenschaften mit besonders geringer Neigung zur Ausbildung von thermischen Rissen auf. Dies beruht insbesondere darauf, dass in der Keramik durch den genannten Sol-Gel-Prozess und auch aufgrund des hohen Siliziumcarbidanteils ein spezielles Mikrorissgefüge geschaffen worden ist, welches unter anderem beispielsweise zu einer starken Verminderung der Risslängen von Kantenrissen führt.

Auf diese Weise kann mit dem erfindungsgemäßen Vorgehen das Verlustrisiko von keramischen Hitzeschildern an der Auskleidung reduziert und die Anzahl der Wartungs- und Austauschzyklen der Hitzeschilder verringert werden. Insgesamt kann eine höhere Lebensdauer erreicht werden.

Darüber hinaus ist noch zu nennen, dass die Gießmasse insgesamt zementfrei ist (also im Wesentlichen kein CaO aufweist) und sich ferner aufgrund der niedrigen Sintertemperatur auch Kostenvorteile beim Herstellungsprozess ergeben.

Die Gießmasse eignet sich aufgrund ihrer physikalischen, chemischen und mineralogischen Eigenschaften sehr gut zur Herstellung von Verbundwerkstoffen, auch oxidischer Natur. Hiezu zählen Composite-Bauteile, wie beispielsweise mit Fasern verstärkte Bauteile auf CMC-Basis (ceramic matrix composites), mit Strukturkeramiken verstärkte Bauteile oder gradierte Bauteile.

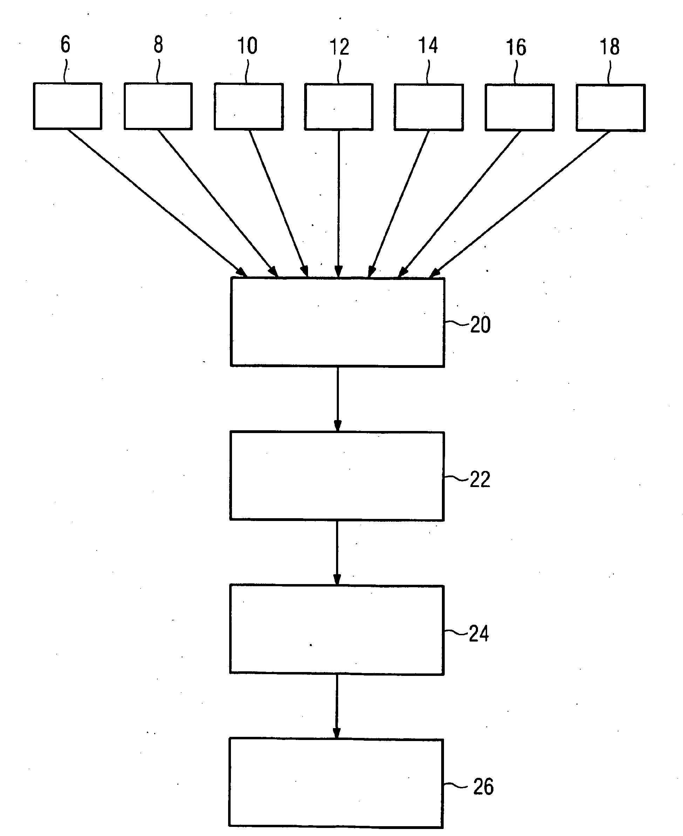

## Patentansprüche

1. Verfahren zum Herstellen eines gebrannten Formteils einer feuerfesten Auskleidung, insbesondere für eine Brennkammer einer stationären Gasturbine, mit den Schritten: Herstellen (20) einer Formmasse mit mindestens den Anteilen Siliziumcarbid (8), Aluminiumoxid (10) und Aluminiumsilikat (12) unter Zugabe kolloidaler Kieselsäurelösung (14), Vergießen (22) der Formmasse unter Vibration, Sprunghaftes Absenken (24) der Temperatur der Formmasse, sowie Trocknen und Brennen (26) der vergossenen Formmasse.

2. Verfahren nach Anspruch 1,
bei dem in der Formmasse ein Gewichtsanteil von mehr als zirka 50% Siliziumcarbid (8) und ein Gewichtsanteil von weniger als zirka 50% Aluminiumsilikat (12) gemischt werden.

3. Verfahren nach Anspruch 1 oder 2,
bei dem die Temperatur beim sprunghaften Absenken (24) auf weniger als zirka 0°C gesenkt und dort insbesondere über einen Zeitraum von mehr als 15 min und weniger als zirka 2,5 h gehalten wird.

4. Verfahren nach einem der Ansprüche 1 bis 3,
bei dem die vergossene Formmasse bei einer Temperatur von zwischen zirka 1300°C und zirka 1650°C gebrannt wird.

## Claims

1. Method for producing a fired molded part of a fireproof lining, especially for a combustion chamber of a stationary gas turbine, with the steps:
production (20) of a molding compound with at least the constituents silicon carbide (8), aluminum oxide (10) and
aluminum silicate (12) with the addition of colloidal silicic acid solution (14),
pouring (22) of the molding compound under vibration,
sudden reduction (24) of the temperature of the molding compound,
and drying and firing (26) of the poured molding compound.

2. Method according to claim 1,
in which more than about 50% by weight of silicon carbide (8) and less than about 50% by weight of aluminum silicate (12) are mixed in the molding compound.

3. Method according to claim 1 or 2,
in which the temperature is suddenly reduced (24) to less than about 0°C and maintained there in particular for a period of more than 15 min. and less than about 2.5 h.

4. Method according to one of claims 1 to 3,
in which the molding compound is burnt at a temperature of between about 1300°C and about 1650°C.

## Revendications

1. Procédé de fabrication d'une pièce moulée calcinée d'un revêtement réfractaire, notamment pour une chambre de combustion de turbine à gaz fixe, comprenant les stades dans lesquels : on prépare une matière à mouler ayant au moins les proportions carbure de silicium ( 8 ), oxyde d'aluminium (10) et silicate d'aluminium ( 12 ) avec addition d'une solution ( 14 ) colloïdale d'acide silicique, on coule ( 22 ) la matière à mouler avec vibration, on abaisse ( 24 ) brusquement la température de la matière à mouler, ainsi qu'on sèche et on calcine la matière à mouler coulée.

2. Procédé suivant la revendication 1,
dans lequel dans la matière à mouler on mélange une proportion en poids de plus d'environ 50% de carbure de silicium ( 8 ) et une proportion en poids de moins d'environ 50% de silicate d' aluminium ( 12 ).

3. Procédé suivant la revendication 1 ou 2,
Dans lequel on abaisse la température lors de l'abaissement ( 24 ) brusque à moins d'environ 0°C et on l'y maintient notamment pendant un laps de temps de plus de 15 minutes et de moins d'environ 2,5 heures.

4. Procédé suivant l'une des revendications 1 à 3,
dans lequel on calcine la masse à mouler coulée à une température comprise entre environ 1300°C et environ 1650°C.
